# EUROPEAN PATENT SPECIFICATION

(11) **EP 3 175 569 B1**
(45) Date of publication and mention of the grant of the patent: **29.08.2018**
(21) Application number: 15750200.6
(22) Date of filing: 29.07.2015
(51) Int. Cl.: H04L 1/16, H04L 5/00, H04L 1/18, H04W 72/00

(54) **CELLULAR FEEDBACK TRANSMISSION FOR USER EQUIPMENTS ENABLING DEVICE-TO-DEVICE COMMUNICATIONS**
ZELLULARE RÜCKKOPPLUNGSÜBERTRAGUNG FÜR BENUTZERGERÄTE ZUR AKTIVIERUNG VON VORRICHTUNG-ZU-VORRICHTUNG-KOMMUNIKATIONEN
TRANSMISSION DE RÉTROACTION CELLULAIRE POUR ÉQUIPEMENTS UTILISATEUR PERMETTANT DES COMMUNICATIONS DE DISPOSITIF À DISPOSITIF

(30) Priority: 31.07.2014 CN 201410370852; 30.09.2014 US 201414502814
(43) Date of publication of application: 07.06.2017
(73) Proprietor: Microsoft Technology Licensing, LLC, Redmond, WA 98052-6399 (US)
(72) Inventor: LEI, Haipeng, Redmond, Washington 98052-6399 (US); ZHANG, Zhi, Redmond, Washington 98052-6399 (US)
(74) Representative: CMS Cameron McKenna Nabarro Olswang LLP
(86) International application number: PCT/US2015/042557
(87) International publication number: WO 2016/018961

(56) References cited:
- WO-A1-2013/122384
- US-A1- 2014 064 213

## Description

### BACKGROUND

Major effort has been put in recent years on the development of Third Generation Partnership Project (3GPP) Long Term Evolution (LTE), which provides Evolved Universal Mobile Telecommunications System (UMTS) terrestrial radio access (EUTRA) and EUTRA network (EUTRAN) technology for higher data rates and system capacity.

In 3GPP LTE-Advanced (LTE-A) cellular systems, device-to-device (D2D) communication has been proposed to enable the proximity-based service. The D2D communication allows user equipments (UEs) to communicate with each other through a direct connection. In general, the D2D communication operates in uplink spectrum in the case of Frequency Division Duplex (FDD) or uplink subframes of the cell giving coverage. The D2D signals are communicated using Single Carrier Frequency Division Multiple Access (SC-FDMA).

In parallel with the D2D communications, the UEs may perform cellular communications with a base station (BS). From the perspective of the individual UEs, on any given carrier, the D2D signals and cellular signals are multiplexed using Time Division Multiplexing (TDM). In some cases, when receiving downlink information from the BS, it is necessary for the UE to provide uplink feedback. Specifically, the feedback is usually transmitted according to the predefined timing.

WO 2013/122384 A1, interpreted using the publication US 2015/0016410 A1 (Lee et al.) originated from the same international application, discloses a method and system for avoiding collision between a first acknowledgement signal (ACK/NACK) for a D2D communication with a second acknowledgement signal (ACK/NACK) for a non-D2D communication in a FDD LTE system. Said collision may happen when a receiving user equipment (UE) acknowledges, using the first ACK/NACK signal, to a base station (eNodeB) the reception of D2D communication data from a transmitting UE following a respective D2D scheduling information emitted by the eNodeB. When the eNodeB subsequently performs a DL assignment to a third UE for a respective non-D2D data communication to it on a PDSCH channel, said third UE might send the second ACK/NACK signal to the eNodeB at the same time and using the same PUCCH resource as the first ACK/NACK signal. The presented method proposes assigning the ACK/NACK signals for D2D communication independently from the ACK/NACK signals for non-D2D communication, assigning e.g. a specific region of a PUCCH for ACK/NACK signals for D2D communication, as well as, alternatively, assigning a specific separate CCE region for D2D scheduling information. As a result, said first and second ACK/NACK signals can be sent in parallel in the same sub frame to the eNodeB.

US 2014/0064213 A1 (Guo et al.) relates to improved feedback mechanisms between a wireless device and a base station in a cellular communications network. The reference proposes conveying the feedback information via selection and detection of radio resources utilized for an uplink reference signal transmitted from the wireless device to the base station. This permits to send additional feedback information without sacrificing any bandwidth available for data transfer. An embodiment discloses the use of an uplink sounding reference signal as uplink reference signal in a TDD LTE application.

### SUMMARY

In current 3GPP LTE-A systems, for a D2D-enabled UE that works in the D2D transmission mode, the transmission of uplink cellular feedback may conflict with the D2D communications. By way of example, suppose that the downlink cellular transmission from a BS is received in the downlink subframe *n* and the UE shall report the positive or negative acknowledgement (ACK/NACK) in the uplink subframe *n* + 4 to the BS according to predefined LTE FDD timing. In this event, no D2D signal can be transmitted in the uplink subframe *n* + 4 due to the prioritization of cellular communication over the D2D communication, which will result in the performance loss of the D2D communication.

In order to avoid any potential performance degradation of the D2D communication, embodiments of the subject matter described herein provide a solution for feedback transmission for the UEs working in the D2D transmission mode. More specifically, the cellular feedback and the D2D signals may be multiplexed in a same subframe. In one embodiment, the cellular feedback may be transmitted using a symbol that is not used to transmit the D2D signal. For example, within the D2D subframe, the symbol that is initially kept as the D2D gap may be used to transmit the cellular feedback.

By multiplexing the cellular feedback with the D2D signals in a same subframe, the UE can transmit the cellular feedback to the BS without breaking off the D2D transmission. In this way, performance degradation of the D2D or cellular communications can be avoided. Additionally, the proposed mechanism for cellular feedback transmission has no impact on the D2D recipient UEs and will not introduce any resource waste in the cellular system.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

### DESCRIPTION OF THE DRAWINGS

FIG. **1** illustrates a block diagram of user equipment in accordance with one embodiment of the subject matter described herein;
FIG. **2** illustrates a block diagram of an environment in which embodiments of the subject matter described herein may be implemented;
FIG. **3** illustrates a flowchart of a method for transmitting the cellular feedback at the UE side in accordance with one embodiment of the subject matter described herein;
FIGS. **4A-4C** illustrates schematic diagrams of subframes in which the cellular uplink feedback and the D2D signals are multiplexed in accordance with one embodiment of the subject matter described herein;
FIG. **5** illustrates a flowchart of a method for receiving the cellular feedback at the BS side in accordance with one embodiment of the subject matter described herein;
FIG. **6** illustrates a block diagram of an apparatus for transmitting the cellular feedback at the UE side in accordance with one embodiment of the subject matter described herein; and
FIG. **7** illustrates a block diagram of an apparatus for receiving the cellular feedback at the UE side in accordance with one embodiment of the subject matter described herein.

### DETAILED DESCRIPTION

The subject matter described herein will now be discussed with reference to several example embodiments. It should be understood these embodiments are discussed only for the purpose of enabling those skilled persons in the art to better understand and thus implement the subject matter described herein, rather than suggesting any limitations on the scope of the subject matter.

As used herein, the term "base station" (BS) may represent a node B (NodeB or NB), an evolved NodeB (eNodeB or eNB), a Remote Radio Unit (RRU), a radio header (RH), a remote radio head (RRH), a relay, a low power node such as a femto, a pico, and so forth.

As used herein, the term "user equipment" (UE) refers to any device that is capable of communicating with the BS. By way of example, the UE may include a terminal, a Mobile Terminal (MT), a Subscriber Station (SS), a Portable Subscriber Station (PSS), a Mobile Station (MS), or an Access Terminal (AT).

As used herein, the term "includes" and its variants are to be read as open terms that mean "includes, but is not limited to." The term "based on" is to be read as "based at least in part on." The term "one embodiment" and "an embodiment" are to be read as "at least one embodiment." The term "another embodiment" is to be read as "at least one other embodiment." Other definitions, explicit and implicit, may be included below.

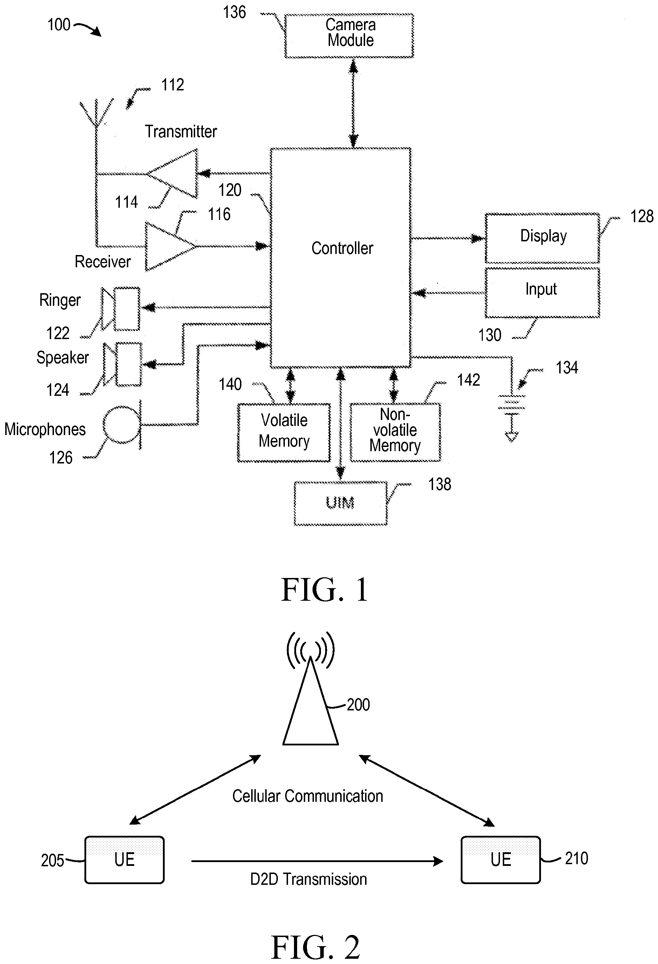

FIG. **1** illustrates a block diagram of a UE **100** in accordance with one embodiment of the subject matter described herein. The UE **100** may be a mobile device with a wireless communication capability. However, it is to be understood that any other types of user devices may also easily adopt embodiments of the subject matter described herein, such as a portable digital assistant (PDA), a pager, a mobile computer, a mobile TV, a game apparatus, a laptop, a tablet computer, a camera, a video camera, a GPS device, and other types of voice and textual communication system. A fixed-type device may likewise easily use embodiments of the subject matter described herein.

As shown, the UE **100** comprises one or more antennas **112** operable to communicate with the transmitter **114** and the receiver **116.** With these devices, the UE **100** may perform cellular communications with one or more BSs. Additionally, the UE **100** may support the D2D communications with one or more other UEs.

The UE **100** further comprises at least one controller **120.** It should be understood that the controller **120** comprises circuits or logic required to implement the functions of the UE **100.** For example, the controller **120** may comprise a digital signal processor, a microprocessor, an A/D converter, a D/A converter, and/or any other suitable circuits. The control and signal processing functions of the UE **100** are allocated in accordance with respective capabilities of these devices.

The UE **100** may further comprise a user interface, which, for example, may comprise a ringer **122,** a speaker **124,** a microphone **126,** a display **128,** and an input interface **130,** and all of the above devices are coupled to the controller **120.** The UE **100** may further comprise a camera module **136** for capturing static and/or dynamic images.

The UE **100** may further comprise a battery **134,** such as a vibrating battery set, for supplying power to various circuits required for operating the UE **100** and alternatively providing mechanical vibration as detectable output. In one embodiment, the UE **100** may further comprise a user identification module (UIM) **138.** The UIM **138** is usually a memory device with a processor built in. The UIM **138** may for example comprise a subscriber identification module (SIM), a universal integrated circuit card (UICC), a universal user identification module (USIM), or a removable user identification module (R-UIM), etc. The UIM **138** may comprise a card connection detecting apparatus according to embodiments of the subject matter described herein.

The UE **100** further comprises a memory. For example, the UE **100** may comprise a volatile memory **140,** for example, comprising a volatile random access memory (RAM) in a cache area for temporarily storing data. The UE **100** may further comprise other non-volatile memory **142** which may be embedded and/or movable. The non-volatile memory **142** may additionally or alternatively include for example, EEPROM and flash memory, etc. The memory may store any item in the plurality of information segments and data used by the UE **100** so as to implement the functions of the UE **100.** For example, the memory may contain machine-executable instructions which, when executed, cause the controller **120** to implement the method described below.

It should be understood that the structural block diagram in FIG. **1** is shown only for illustration purpose, without suggesting any limitations on the scope of the subject matter described herein. In some cases, some devices may be added or reduced as required.

FIG. **2** shows an environment of a cellular system in which embodiments of the subject matter described herein may be implemented. As shown, one or more UEs may communicate with a BS **200.** In this example, there are two UEs **205** and **210.** This is only for the purpose of illustration without suggesting limitations on the number of UEs. There may be any suitable number of UEs in communication with the BS **200.** The UEs **205** and/or **210** may be implemented by the UE **100** as described above, for example. The cellular communications between the UEs **205** and **210** and the BS **200** may be performed according to any appropriate communication protocols including, but not limited to, the first generation (1G), the second generation (2G), 2.5G, 2.75G, the third generation (3G), the fourth generation (4G) communication protocols, and/or any other protocols either currently known or to be developed in the future.

The UEs **205** and **210** may perform D2D communications with one another. In the example shown in FIG. **2****,** only for the purpose of illustration, the UE **205** works in the D2D transmission mode while the UE **210** works in the D2D reception mode. That is, the UE **205** may transmit D2D signals to the UE **210.** From the perspective of the UE **205,** on any given carrier, the D2D signals and cellular signals are multiplexed using TDM.

Traditionally, if the UE **205** receives downlink information from the BS **200** that requires feedback, the UE **205** has to stop the D2D transmission to the UE **210** when sending the uplink feedback to the BS **200.** Considering the fact that the D2D transmission in usually a slow scale service, it has large impact on the D2D communication between the UEs **205** and **210.** However, if the D2D data broadcasting is prioritized over the cellular feedback transmission, the base station **200** may initiate unnecessary downlink retransmission which results in downlink performance loss.

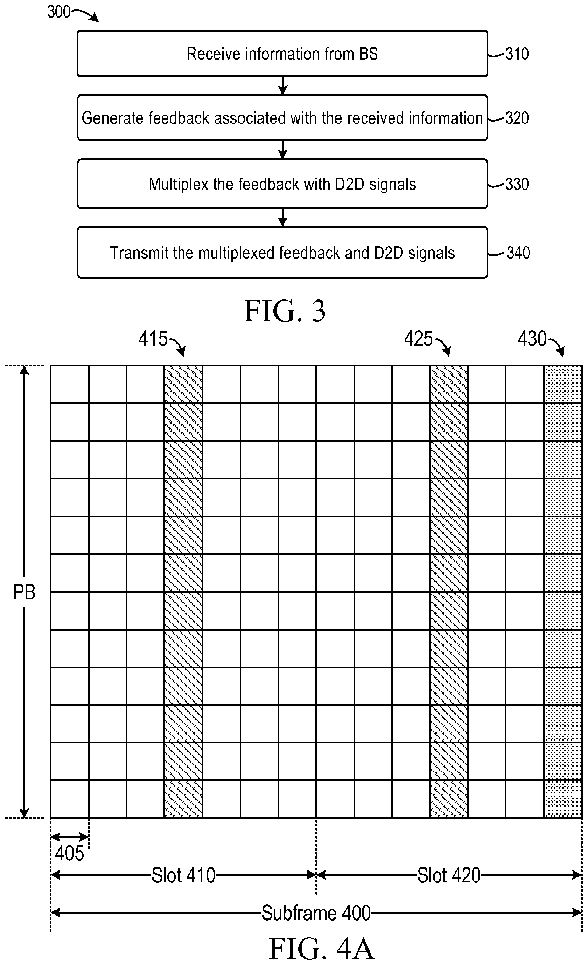

FIG. **3** shows the flowchart of a method **300** for cellular feedback transmission in accordance with one embodiment of the subject matter described herein. The method **300** may be at least in part implemented by the UE **205** that works in the D2D transmission mode, for example.

The method **300** is entered at step **310,** where downlink information is received from the BS **200,** for example, by use of the one or more receivers **116** of the UE **205.** By way of example, in one embodiment, the information received at step **310** may include data transmitted on a downlink data channel such as Physical Downlink Shared Channel (PDSCH). Alternatively or additionally, the received information may include control information transmitted on a downlink control channel such as Physical Downlink Control Channel (PDCCH). In one embodiment, the downlink control information may indicate the release of downlink Semi-Persistent Scheduling (SPS), for example. Of course, it is also possible to receive any additional or alternative information at step **310.**

Responsive to receipt of the downlink information, at step **320,** the controller **120** of the UE **205** is configured to generate feedback depending on a determination whether the information is correctly received. For example, it is possible to verify the received information by applying the cyclic redundancy check (CRC) or any other suitable processes. In one embodiment, the feedback may include ACK/NACK information. That is, if it is determined that the information is correctly received, the controller **120** is configured to generate a positive acknowledgment (ACK). On the contrary, if the UE **205** determines that the information is not correctly received, a negative acknowledgement (NACK) may be generated by the controller **120.** It is to be understood that ACK/NACK is just an example of the feedback, without suggesting any limitations on the subject matter described herein. The feedback generated at step **320** may include any additional or alternative information.

The method **300** then proceeds to step **330,** where the cellular feedback is multiplexed with the D2D signals to be transmitted. As discussed above, traditionally when it is required to transmit the uplink cellular feedback, the UE **205** has to stop the transmission of relevant D2D signals (if any). For example, in the 3GPP LTE-A system, upon receiving information on PDSCH or PDCCH indicating the downlink SPS release in the downlink subframe *n*, the UE **205** shall report the corresponding feedback according the predefined downlink Hybrid Automatic Repeat Request (HARQ) timing. Specifically, the UE **205** will transmit the feedback in an uplink subframe *n* + *m,* where *m* is set to 4 for FDD. Then, due to the prioritization of the cellular communication over the D2D communication, no D2D signal can be transmitted in the subframe *n* + 4. As a result, any D2D recipient UE within the coverage of the UE **205,** for example, the UE **210** as shown in FIG. **2****,** will lose one opportunity in the reception.

Contrary to such conventional solutions, in accordance with embodiments of the subject matter described herein, the cellular feedback such as the ACK/NACK information may be multiplexed or combined with the D2D signals. In this way, it is possible to enable the cellular feedback transmission without interrupting the D2D transmission. In one embodiment, TDM may be used to combine the cellular feedback and the D2D signals. More specifically, in such embodiment, the cellular feedback and the D2D signals are multiplexed in a same D2D subframe. As used herein, the term "D2D subframe" refers to any subframe that is used to transmit the D2D signals.

In one embodiment, the UE **205** may select a suitable D2D subframe according to the predefined downlink HARQ timing. For example, in the example described above where the UE **205** receives the PDSCH or PDCCH information indicating the downlink SPS release in the subframe *n,* the subframe *n* + *m* may be selected according to the downlink HARQ timing, such that the UE **205** simultaneously transmits the D2D signals and the uplink cellular ACK/NACK feedback in the selected subframe *n* + *m.*

In one embodiment, the cellular feedback may be transmitted using the symbol in the D2D subframe that is kept as a D2D gap, that is, the gap for D2D communications. As known, within a D2D subframe, there may be a symbol(s) that is not used to transmit any D2D signals. Such symbol is used as the D2D gap between different D2D subframes to avoid potential interference. For example, in one embodiment, the end symbol in each D2D subframe may be kept as the D2D gap. Alternatively or additionally, the start symbol may be used as the D2D gap. In the following discussions, the end symbol within the D2D subframe will be described as the D2D gap. This is merely for the purpose of illustration, without suggesting any limitations on the subject matter described herein. In alternative embodiments, any suitable symbol(s) in the D2D subframe may be kept as the D2D gap.

For the purpose of illustration, FIG. **4A** shows a schematic diagram of a subframe **400** of a resource block (RB). By way of example, in this embodiment, the D2D subframe **400** may contain fourteen (14) symbols **405** and may be of a length of 1ms. The subframe **400** contains two slots **410** and **420,** each of a length of 0.5ms in this example. The slots **410** and **420** may contain a Physical Uplink Shared Channel (PUSCH) Demodulation Reference Signal (DM RS) **415** and **425,** respectively.

In this embodiment, the last symbol **430** of the subframe **400** is kept as the D2D gap. That is, in the conventional solutions, the symbol **430** will not be used to transmit any D2D signals. In accordance with embodiments of the subject matter described herein, the symbol **430** is used to transmit the uplink cellular feedback generated at step **320.** The other symbols in the D2D subframe **400** may be used to transmit the D2D signals. As such, the uplink cellular feedback and the D2D signals are multiplexed in the same D2D subframe **400.**

The symbol **430** may be used to transmit a signal capable of indicating the content or status of the feedback. For example, when the feedback includes the ACK/NACK information, the symbol **430** may be used to transmit a signal that indicates at least two states that are corresponding to the positive acknowledgement (ACK) and negative acknowledgement (NACK), respectively.

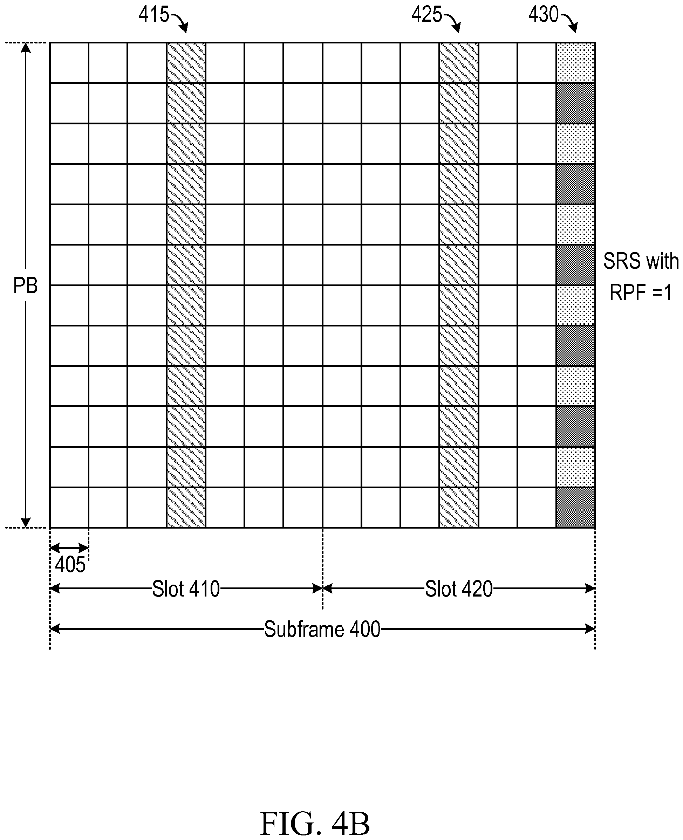

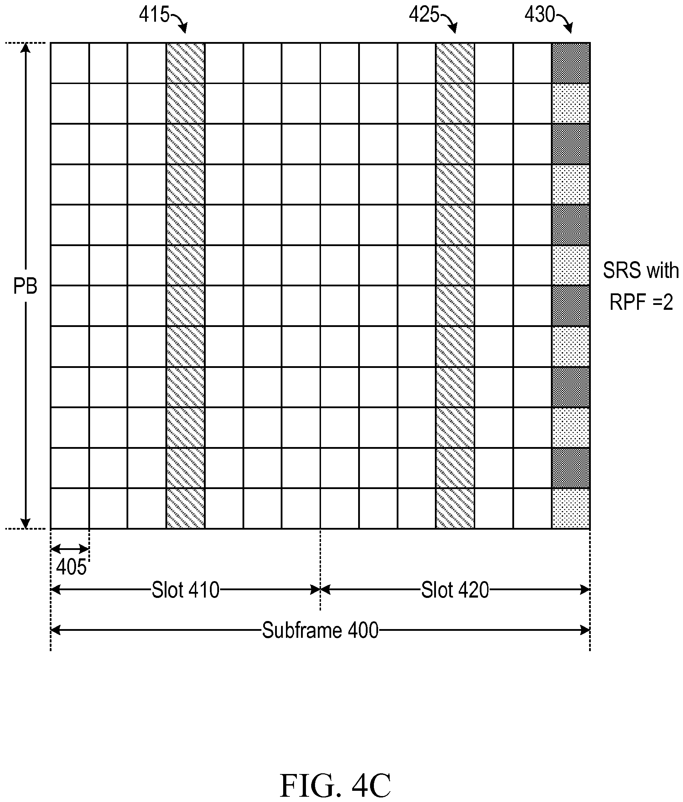

By way of example, in one embodiment, a sounding reference signal (SRS) with two different repetition factors (RPFs) may be generated as the uplink cellular feedback and transmitted in the symbol **430** of the D2D subframe **400.** Specifically, in response to a determination that the information is correctly received at step **310,** the SRS with a first RPF may be transmitted. As an example, in one embodiment where the SRS is implemented as a comb-type signal, it is possible to set RPF = 1 to transmit the odd-comb SRS to indicate the positive acknowledgement, as shown in FIG. **4B****.** On the other hand, if it is determined that the information is incorrectly received at step **310,** the SRS with a different second RPF may be generated and transmitted. For the comb-type SRS, the RPF may be set to 2 such that the even-comb SRS is used to indicate the negative acknowledgement, as shown in FIG. **4C****.**

It is to be understood that the use of comb-type SRS is merely for the purpose of illustration, without suggesting any limitations on the subject matter described herein. For example, in another embodiment, a non-comb SRS may be used to implement the cellular feedback. In fact, any other appropriate signals or patterns may be transmitted in the symbol **430** to indicate the positive or negative acknowledgment and/or any other feedback information.

Using the D2D gap in the subframe to transmit the uplink cellular feedback would be beneficial. Since the D2D gap carries no D2D signal, the recipient UE will not detect this symbol. Therefore, the transmission of the cellular feedback in the D2D gap will put no impact on the D2D recipient UEs. Moreover, there is no need for any additional resource to implement the cellular feedback transmission.

However, it is to be understood that it is not necessarily required to transmit the cellular feedback in the D2D gap. For example, in another embodiment, any one or more symbols in the D2D subframe that are initially used to carry the D2D signals may be adapted to transmit the cellular feedback. In such embodiment, the D2D recipient UEs may be informed not to detect the signals transmitted in these symbols, for example.

Still with reference to FIG. **3****,** at step **340,** the cellular feedback and the D2D signals, which are multiplexed in a single D2D subframe, are simultaneously transmitted. The D2D subframe may be broadcasted by the transmitter **114** of the UE **205,** such that other UEs located in the coverage range of the UE **205** (for example, the UE **210** as shown in FIG. **2**) may receive the D2D subframe. Traditionally the BS **200** is unnecessary to receive and detect such D2D subframe. In accordance with embodiments of the subject matter described herein, in the case that the BS **200** schedules the downlink subframe by transmitting the information to the UE **205,** the BS **200** may receive the D2D subframe transmitted from the UE **205,** for example, according the HARQ timing. Then the feedback information may be detected from the D2D subframe, for example, from the D2D gap without interrupting or otherwise affecting the D2D transmissions.

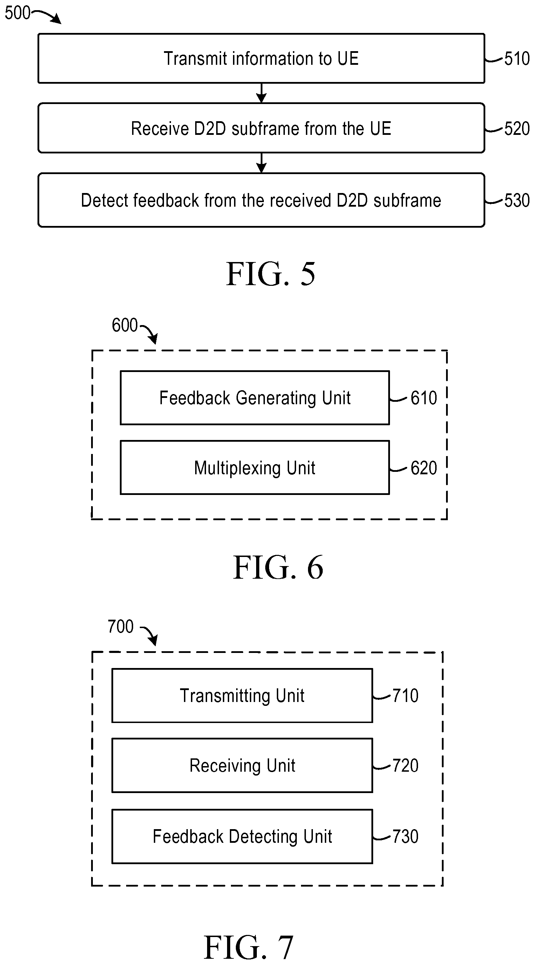

FIG. **5** illustrates a flowchart of a method **500** for feedback receipt at the BS side in accordance with one embodiment of the subject matter described herein. The method **500** may be at least in part implemented by the BS **200** in the cellular system.

The method **500** is entered at step **510** where the information is transmitted by the BS **200** to the UE **205.** As described above, the BS **200** may transmit data and/or control information to the UE **205.** For example, in one embodiment, data may be transmitted to the UE **205** on a downlink data channel such as PDSCH. Alternatively or additionally, the BS **200** may transmit control information on a downlink control channel such as PDCCH to indicate the SPS release, for example.

At step **520,** the BS **200** receives a D2D subframe transmitted from the UE **205.** As discussed above, the D2D subframe contains not only the D2D signals, but also the cellular feedback associated with the information transmitted at step **510.** In one embodiment, in order to detect the cellular feedback, it is only necessary for the BS **200** to receive the D2D subframe that is determined according to the predefined timing. For example, if the downlink information is transmitted in the subframe n and the HARQ timing specifies that the feedback shall be sent back after *m* subframes, then the BS **200** only needs to receive the subframe *n* + *m* transmitted by the UE **205** to obtain the cellular feedback. Of course, it is also possible for the BS **200** to receive one or more additional subframes transmitted from the UE **205.**

Next, at step **530,** the BS **200** detects, from the received D2D subframe, the feedback associated with the information transmitted at step **510.** As discussed above, in one embodiment, the feedback such as the ACK/NACK may be transmitted using the D2D gap in the D2D subframe. For example, in one embodiment where the end symbol in the subframe serves as the D2D gap, the BS **200** may detect the signal transmitted in the end symbol to obtain the feedback. By way of example, as described above, the feedback may be indicated by a SRS with different RPFs. In such embodiment, the BS **200** may detect the SRS RPF to determine whether the information is correctly received at the UE **205.** In this way, the cellular communications between the UE **205** and BS **200** may be performed without causing any performance degradation in the D2D communications.

FIG. **6** shows a block diagram of an apparatus **600** for transmitting the cellular feedback at the UE side. As shown, the apparatus **600** comprises a feedback generating unit **610** configured to generate, responsive to receiving information from a base station in a cellular system, feedback associated with the received information. The apparatus **600** further comprises a multiplexing unit **620** configured to multiplex the feedback with a D2D signal for transmission.

In one embodiment, the multiplexing unit **620** is configured to indicate the feedback using a symbol in a subframe for transmitting the D2D signal, where the symbol is kept as a D2D gap. By way of example, the symbol may be the last symbol in the subframe. In one embodiment, the multiplexing unit **620** is configured to multiplex the feedback with the D2D signal in the subframe according to predefined downlink HARQ timing. That is, the subframe for multiplexing the D2D signal and the feedback may be determined according to the downlink HARQ timing.

In one embodiment, the feedback generating unit **610** comprises a SRS generating unit configured to generate a SRS as the feedback. In one embodiment, the SRS generating unit is configured to generate the SRS with a first RPF responsive to determining that the information is correctly received, and to generate the SRS with a second RPF that is different from the first RPF responsive to determining that the information is incorrectly received or vice versa.

In one embodiment, the received information includes data received on a downlink data channel, or control information received on a downlink control channel that indicates the downlink SPS release. In one embodiment, the feedback includes ACK/NACK information.

FIG. **7** shows a block diagram of an apparatus **700** for receiving the cellular feedback at the BS side. In one embodiment, the apparatus **700** may be the BS **200** per se, for example. As shown, the apparatus **700** comprises: a transmitting unit **710** configured to transmit information to a UE; a receiving unit **720** configured to receive from the UE a subframe that is used to transmit D2D signals; and a feedback detecting unit **730** configured to detect feedback associated with the transmitted information from the received subframe.

In one embodiment, the receiving unit **720** is configured to receive the subframe according to predefined downlink HARQ timing. In one embodiment, the feedback detecting unit **730** is configured to detect the feedback from a symbol in the subframe that is kept as a gap for D2D communications. In one embodiment, the symbol is the last symbol in the subframe. In one embodiment, the feedback detecting unit **730** is configured to detect the SRS RPF in the received subframe, for example, in the last symbol kept as the D2D gap. In one embodiment, the feedback includes ACK/NACK information.

The units included in the apparatuses **600** and/or **700** may be implemented in various manners, including software, hardware, firmware, or any combination thereof. In one embodiment, one or more units may be implemented using software and/or firmware, for example, machine-executable instructions stored on storage medium. In addition to or instead of machine-executable instructions, parts or all of the units in the apparatuses **600** and/or **700** may be implemented, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

Generally, various embodiments of the subject matter described herein may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the subject matter described herein are illustrated and described as block diagrams, flowcharts, or using some other pictorial representation, it will be appreciated that the blocks, apparatus, systems, techniques or methods described herein may be implemented in, as non-limiting examples, hardware, software, firmware, special purpose circuits or logic, general purpose hardware or controller or other computing devices, or some combination thereof.

By way of example, embodiments of the subject matter can be described in the general context of machine-executable instructions, such as those included in program modules, being executed in a device on a target real or virtual processor. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of the subject matter described herein may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method (300) implemented by user equipment (100, 205, 210) comprising:
responsive to receiving (310) information from a base station (200) in a cellular system, generating (320) feedback associated with the received information, comprising generating a sounding reference signal, SRS, as the feedback, wherein generating the SRS comprises:
responsive to determining that the information is correctly received, generating the SRS with a first repetition factor, RPF, and
responsive to determining that the information is incorrectly received, generating the SRS with a second RPF that is different from the first RPF; and
multiplexing (330) the feedback with a device-to-device, D2D, signal in a subframe (400) for transmission.

2. The method of claim 1, wherein multiplexing (330) the feedback with the D2D signal comprises:
indicating the feedback using an end symbol (430) in the subframe (400) that carries no D2D signal.

3. The method of claim 1, further comprising:
determining the subframe (400) for multiplexing the feedback and the D2D signal according to predefined downlink Hybrid Automatic Repeat Request, HARQ, timing.

4. The method of claim 1, wherein the received information includes data received on a downlink data channel, or control information received on a downlink control channel that indicates a release of downlink Semi-Persistent Scheduling, SPS.

5. The method of claim 1, wherein the feedback includes ACK/NACK information.

6. A method (500) implemented by a base station (200) comprising:
transmitting (510) information to user equipment (100, 205, 210);
receiving (520), from the user equipment (100, 205, 210), a subframe (400) comprising a device-to-device, D2D, signal; and
detecting (530) feedback associated with the transmitted information from the received subframe (400), comprising:
detecting a sounding reference signal, SRS, and its repetition factor, RPF, in the received subframe (400), the SRS including its RPF representing the feedback, and
determining whether the transmitted information has been correctly received by the user equipment (100, 205, 210) using the detected RPF of the SRS.

7. The method of claim 6, wherein receiving (520) the subframe (400) comprises:
receiving the subframe (400) according to predefined downlink Hybrid Automatic Repeat Request, HARQ, timing.

8. The method of claim 6, wherein detecting (530) the feedback comprises:
detecting the feedback from an end symbol (430) in the subframe (400) that carries no D2D signal.

9. User equipment (100, 205, 210) comprising:
a receiver (116) configured to receive information from a base station (200) in a cellular system;
a controller (120) configured to generate feedback associated with the received information, comprising generating a sounding reference signal, SRS, as the feedback, and further including:
responsive to determining that the information is correctly received, generating the SRS with a first repetition factor, RPF, and
responsive to determining that the information is incorrectly received, generating the SRS with a second RPF that is different from the first RPF,
the controller (120) being further configured to multiplex the feedback with a device-to-device, D2D, signal in a subframe (400); and
a transmitter (114) configured to transmit the subframe (400).

10. The user equipment (100, 205, 210) of claim 9, wherein the controller (120) is configured to multiplex the feedback with the D2D signal by indicating the feedback using an end symbol (430) in the subframe (400) that carries no D2D signal.

11. A base station (200, 700) comprising:
a transmitting unit (710) configured to transmit information to user equipment (100, 205, 210);
a receiving unit (720) configured to receive, from the user equipment (100, 205, 210), a subframe (400) comprising a device-to-device, D2D, signal; and
a feedback detecting unit (730) configured to detect feedback associated with the transmitted information from the received subframe (400), wherein the detection of the feedback comprises:
detecting a sounding reference signal, SRS, and its repetition factor, RPF, in the received subframe (400), the SRS including its RPF representing the feedback, and
determining whether the transmitted information has been correctly received by the user equipment (100, 205, 210) using the detected RPF of the SRS.

## Patentansprüche

1. Verfahren (300), das durch ein Endgerät (100, 205, 210) implementiert ist, umfassend:
ansprechend auf ein Empfangen (310) einer Information von einer Basisstation (200) in einem Mobilfunksystem, Generieren (320) eines mit der empfangenen Information verbundenen Feedbacks, umfassend ein Generieren eines Referenzsondierungssignals, SRSs, als das Feedback, wobei das Generieren des SRSs umfasst:
ansprechend auf ein Bestimmen, dass die Information korrekt empfangen wird, Generieren des SRSs mit einem ersten Wiederholfaktor, RPF, und
ansprechend auf ein Bestimmen, dass die Information nicht korrekt empfangen wird, Generieren des SRSs mit einem zweiten RPF, der sich von dem ersten RPF unterscheidet; und
Multiplexen (330) des Feedbacks mit einem Gerät-zu-Gerät-, D2D-, Signal in einem Subrahmen (400) zur Übertragung.

2. Verfahren nach Anspruch 1, wobei das Multiplexen (330) des Feedbacks mit dem D2D-Signal umfasst:
Kennzeichnen des Feedbacks unter Verwendung eines Endsymbols (430) in dem Subrahmen (400), der kein D2D-Signal trägt.

3. Verfahren nach Anspruch 1, weiter umfassend:
Bestimmen des Subrahmens (400) zum Multiplexen des Feedbacks und des D2D-Signals gemäß einem vordefinierten Downlink Hybrid-Automatic-Repeat-Request-, HARQ-, Timing.

4. Verfahren nach Anspruch 1, wobei die empfangene Information auf einem Downlink-Datenkanal empfangene Daten oder eine auf einem Downlink-Steuerkanal empfangene Steuerinformation, die eine Freigabe eines Downlink Semi-Persistent-Schedulings, SPSs, anzeigen bzw. anzeigt, beinhaltet.

5. Verfahren nach Anspruch 1, wobei das Feedback eine ACK/NACK-Information beinhaltet.

6. Verfahren (500), das durch eine Basisstation (200) implementiert ist, umfassend:
Übertragen (510) einer Information an ein Endgerät (100, 205, 210);
Empfangen (520), von dem Endgerät (100, 205, 210), eines Subrahmens (400), der ein Gerät-zu-Gerät-, D2D-, Signal umfasst; und
Ermitteln (530) eines mit der übertragenen Information verbundenen Feedbacks aus dem empfangenen Subrahmen (400), umfassend:
Ermitteln eines Referenzsondierungssignals, SRSs, und seines Wiederholfaktors, RPFs, in dem empfangenen Subrahmen (400), wobei das SRS einschließlich seines RPFs das Feedback repräsentiert, und
Bestimmen, ob die übertragene Information korrekt durch das Endgerät (100, 205, 210) empfangen wurde, unter Verwendung des ermittelten RPFs des SRSs.

7. Verfahren nach Anspruch 6, wobei das Empfangen (520) des Subrahmens (400) umfasst:
Empfangen des Subrahmens (400) gemäß einem vordefinierten Downlink Hybrid-Automatic-Repeat-Request-, HARQ-, Timing.

8. Verfahren nach Anspruch 6, wobei das Ermitteln (530) des Feedbacks umfasst:
Ermitteln des Feedbacks aus einem Endsymbol (430) in dem Subrahmen (400), der kein D2D-Signal trägt.

9. Endgerät (100, 205, 210), umfassend:
einen Empfänger (116), der dazu konfiguriert ist, in einem Mobilfunksystem eine Information von einer Basisstation (200) zu empfangen;
eine Steuerung (120), die dazu konfiguriert ist, ein mit der empfangenen Information verbundenes Feedback zu generieren, umfassend ein Generieren eines Referenzsondierungssignals, SRSs, als das Feedback, und weiter einschließend:
ansprechend auf ein Bestimmen, dass die Information korrekt empfangen wird, Generieren des SRSs mit einem ersten Wiederholfaktor, RPF, und
ansprechend auf ein Bestimmen, dass die Information nicht korrekt empfangen wird, Generieren des SRSs mit einem zweiten RPF, der sich von dem ersten RPF unterscheidet,
wobei die Steuerung (120) weiter dazu konfiguriert ist, das Feedback mit einem Gerät-zu-Gerät-, D2D-, Signal in einem Subrahmen (400) zu multiplexen; und
einen Sender (114), der dazu konfiguriert ist, den Subrahmen (400) zu übertragen.

10. Endgerät (100, 205, 210) nach Anspruch 9, wobei die Steuerung (120) dazu konfiguriert ist, das Feedback mit dem D2D-Signal zu multiplexen durch Kennzeichnen des Feedbacks unter Verwendung eines Endsymbols (430) in dem Subrahmen (400), der kein D2D-Signal trägt.

11. Basisstation (200, 700), umfassend:
eine Übertragungseinheit (710), die dazu konfiguriert ist, eine Information zu einem Endgerät (100, 205, 210) zu übertragen;
eine Empfangseinheit (720), die dazu konfiguriert ist, von dem Endgerät (100, 205, 210) einen Subrahmen (400) zu empfangen, der ein Gerät-zu-Gerät-, D2D-, Signal umfasst; und
eine Feedbackermittlungseinheit (730), die dazu konfiguriert ist, ein mit der übertragenen Information verbundenes Feedback aus dem empfangenen Subrahmen (400) zu ermitteln, wobei die Ermittlung des Feedbacks umfasst:
Ermitteln eines Referenzsondierungssignals, SRSs, und seines Wiederholfaktors, RPFs, in dem empfangenen Subrahmen (400), wobei das SRS einschließlich seines RPFs das Feedback repräsentiert, und
Bestimmen, ob die übertragene Information korrekt durch das Endgerät (100, 205, 210) empfangen wurde, unter Verwendung des ermittelten RPFs des SRSs.

## Revendications

1. Procédé (300) mis en oeuvre par un équipement utilisateur (100, 205, 210) comprenant:
en réponse à une réception (310) d'informations issues d'une station de base (200) dans un système cellulaire, générer (320) un retour associé aux informations reçues, comprenant générer un signal référence de sondage, SRS, comme étant le retour, dans lequel générer le SRS comprend :
en réponse à une détermination que les informations sont correctement reçues, générer le SRS avec un premier facteur de répétition, RPF, et
en réponse à une détermination que les informations sont incorrectement reçues, générer le SRS avec un second RPF qui est différent du premier RPF ; et
multiplexer (330) le retour avec un signal de dispositif à dispositif, D2D, dans une sous-trame (400) pour transmission.

2. Procédé selon la revendication 1, dans lequel multiplexer (330) le retour avec le signal D2D comprend :
indiquer le retour en utilisant un symbole de fin (430) dans la sous-trame (400) qui ne porte aucun signal D2D.

3. Procédé selon la revendication 1, comprenant en outre :
déterminer la sous-trame (400) pour multiplexer le retour et le signal D2D selon un timing de Requête de Répétition Automatique Hybride, HARQ, en liaison descendante prédéfini.

4. Procédé selon la revendication 1, dans lequel les informations reçues incluent des données reçues sur un canal de données en liaison descendante, ou des informations de commande reçues sur un canal de commande en liaison descendante qui indiquent une version d'un Ordonnancement Semi-Persistant en liaison descendante, SPS.

5. Procédé selon la revendication 1, dans lequel le retour inclut des informations ACK/NACK.

6. Procédé (500) mis en oeuvre par une station de base (200) comprenant :
transmettre (510) des informations à un équipement utilisateur (100, 205, 210) ;
recevoir (520), de la part de l'équipement utilisateur (100, 205, 210), une sous-trame (400) comprenant un signal de dispositif à dispositif, D2D ; et
détecter (530) un retour associé aux informations transmises à partir de la sous-trame reçue (400), comprenant :
détecter un signal référence de sondage, SRS, et son facteur de répétition, RPF, dans la sous-trame reçue (400), le SRS incluant son RPF représentant le retour, et
déterminer si les informations transmises ont été correctement reçues par l'équipement utilisateur (100, 205, 210) en utilisant le RPF détecté du SRS.

7. Procédé selon la revendication 6, dans lequel recevoir (520) la sous-trame (400) comprend :
recevoir la sous-trame (400) selon un timing de Requête de Répétition Automatique Hybride, HARQ, en liaison descendante prédéfini.

8. Procédé selon la revendication 6, dans lequel détecter (530) le retour comprend :
détecter le retour à partir d'un symbole de fin (430) dans la sous-trame (400) qui ne porte aucun signal D2D.

9. Equipement utilisateur (100, 205, 210) comprenant :
un récepteur (116) configuré pour recevoir des informations issues d'une station de base (200) dans un système cellulaire ;
un contrôleur (120) configuré pour générer un retour associé aux informations reçues, comprenant générer un signal référence de sondage, SRS, comme étant le retour, et incluant en outre :
en réponse à une détermination que les informations sont correctement reçues, générer le SRS avec un premier facteur de répétition, RPF, et
en réponse à une détermination que les informations sont incorrectement reçues, générer le SRS avec un second RPF qui est différent du premier RPF,
le contrôleur (120) étant configuré en outre pour multiplexer le retour avec un signal de dispositif à dispositif, D2D, dans une sous-trame (400) ; et
un transmetteur (114) configuré pour transmettre la sous-trame (400).

10. Equipement utilisateur (100, 205, 210) selon la revendication 9, dans lequel le contrôleur (120) est configuré pour multiplexer le retour avec le signal D2D en indiquant le retour en utilisant un symbole de fin (430) dans la sous-trame (400) qui ne porte aucun signal D2D.

11. Station de base (200, 700) comprenant :
une unité de transmission (710) configurée pour transmettre des informations à un équipement utilisateur (100, 205, 210) ;
une unité de réception (720) configurée pour recevoir, de la part de l'équipement utilisateur (100, 205, 210), une sous-trame (400) comprenant un signal de dispositif à dispositif, D2D ; et
une unité de détection de retour (730) configurée pour détecter un retour associé aux informations transmises à partir de la sous-trame reçue (400), dans laquelle la détection du retour comprend :
détecter un signal référence de sondage, SRS, et son facteur de répétition, RPF, dans la sous-trame reçue (400), le SRS incluant son RPF représentant le retour, et
déterminer si les informations transmises ont été correctement reçues par l'équipement utilisateur (100, 205, 210) en utilisant le RPF détecté du SRS.
